(19) Europäisches Patentamt

European Patent Office

Office européen des brevets

(11) Veröffentlichungsnummer : **0 175 915**
**B1**

(12) **EUROPÄISCHE PATENTSCHRIFT**

(45) Veröffentlichungstag der Patentschrift :
03.01.90

(51) Int. Cl.[5] : **F 02 P   5/04**, G 01 L 23/22

(21) Anmeldenummer : 85110307.7

(22) Anmeldetag : 17.08.85

(54) Verfahren zur Klopfregelung von Brennkraftmaschinen.

(30) Priorität : 22.09.84 DE 3434823

(43) Veröffentlichungstag der Anmeldung :
02.04.86 Patentblatt 86/14

(45) Bekanntmachung des Hinweises auf die Patenterteilung : 03.01.90 Patentblatt 90/01

(84) Benannte Vertragsstaaten :
DE FR GB IT

(56) Entgegenhaltungen :
DE-A- 3 019 853
GB-A- 2 047 803
GB-A- 2 051 223
GB-A- 2 051 233
GB-A- 2 061 380
US-A- 3 950 981
PATENTS ABSTRACTS OF JAPAN, Band 7, Nr. 59 (M-199)[1204], 11. März 1983; & JP - A - 57 203 864 (HITACHI SEISAKUSHO K.K.) 14-12-1982
PATENTS ABSTRACTS OF JAPAN, Band 8, Nr. 82 (P-268)[1519], 14. April 1984; & JP - A - 58 225 340 (NIPPON DENKI K.K.) 27-12-1983

(73) Patentinhaber : ROBERT BOSCH GMBH
Postfach 50
D-7000 Stuttgart 1 (DE)

(72) Erfinder : Beyer, Hans-Ernst, Dipl.-Ing.
August-Lämmle-Strasse 10
D-7141 Oberriexingen (DE)
Erfinder : Bonitz, Jörg, Dipl.-Ing.
Marsstrasse 19
D-7130 Mühlacker (DE)
Erfinder : Entenmann, Robert
Beihingerweg 15
D-7141 Benningen (DE)
Erfinder : Förster, Siegmar, Dipl.-Ing.
Holdergasse 46
D-7141 Schwieberdingen (DE)
Erfinder : Knab, Mochus
Danneckerstrasse 10
D-7014 Kornwestheim (DE)
Erfinder : Kugler, Wolfgang
Oberriexinger Weg 75
D-7143 Vaihingen/Enz 3 (DE)
Erfinder : Künzel, Walter, Dr. Dipl.-Phys.
Schönbeinstrasse 23
D-7140 Ludwigsburg (DE)
Erfinder : Mahlberg, Alfred, Dr.-Ing.
Weinstrasse 48
D-7149 Freiberg/Neckar (DE)
Erfinder : Mezger, Manfred
Robert-Bosch-Strasse 8
D-7145 Markgröningen (DE)
Erfinder : Miller, Bernhard
Lehenstrasse 31
D-7000 Stuttgart 1 (DE)

Erfinder : **Rohde, Siegfried, Dr.-Ing.**
**Memelweg 1**
**D-7141 Schwieberdingen (DE)**
Erfinder : **Unland, Stefan, Dipl.-Ing.**
**Reichertshalde 96**
**D-7140 Ludwigsburg (DE)**
Erfinder : **Viess, Walter, Dipl.-Ing.**
**Memelweg 1**
**D-7141 Schwieberdingen (DE)**
Erfinder : **Winter, Herbert, Dipl.-Ing.**
**Triebweg 109**
**D-7000 Stuttgart 30 (DE)**
Erfinder : **Zimmermann, Jürgen, Dr. Dipl.-Phys.**
**Hölderlinweg 4**
**D-7141 Schwieberdingen (DE)**

## Beschreibung

### Stand der Technik

Die Erfindung geht aus von einem Verfahren zur Klopfregelung von Brennkraftmaschinen nach der Gattung des Hauptanspruches.

Aus der Druckschrift VDI-Berichte Nr. 515, 1984, Seite 51 bis 54, ist bereits eine elektronische Kennfeldzündung mit überlagerter Klopfregelung bekannt. Bei ihr wird während eines kurbelwellenwinkelsynchronen Meßfensters ein von einem Klopfsensor abgegebenes Signal über einen Regelverstärker, ein als Bandpaß ausgebildetes Klopffilter und einen Gleichrichter geleitet und nach einer Integration über einen Analog-Digital-Wandler einem Mikrocomputer zur Entscheidung zugeführt. In Abhangigkeit vom Integrationsergebnis entscheidet der Mikrocomputer, ob der Zündwinkel als klopfverhindernde Maßnahme in Richtung spät verstellt werden muß. Das Integrationsergebnis dient dem Mikrocomputer nicht nur zu dieser Entscheidungsfindung, sondern er berechnet auch den notwendigen Verstärkungsfaktor des Regelverstärkers, der für eine ausreichende Aussteuerung des Analog-Digital-Wandlers erforderlich ist. Der Verstärkungsfaktor wird über einen Digital-Analog-Wandler und ein Widerstandsnetzwerk auf den Regelverstärker gegeben. Mit dieser automatischen Verstärkungsregelung soll der mittlere Pegel der Signale vor der Integration konstant gehalten werden. Damit ist jedoch notwendigerweise die Klopferkennung mit der Verstärkungsregelung korreliert, was sich insbesondere bei Dauerbetrieb mit hoher Last als unbefriedigend für die Klopferkennungssicherheit erweist.

Aus der DE-OS 30 19 853 ist eine Verstellvorrichtung zur Zündwinkelvorverstellung bekannt, bei der das in einer Brennkraftmaschine erzeugte Klopfen erfaßt wird und die Zündwinkelvorverstellung entsprechend der Stärke des Klopfens auf einen geeigneten Wert geregelt wird. Dabei wird das vom Klopfsensor gelieferte Signal verstärkt und in zwei Teile, einen Klopfanteil und einen Hintergrundanteil, die jeweils während verschiedener Zeitspannen auftreten, aufgeteilt. Von beiden Signalen werden Mittelwerte gebildet, die einem Differentialverstärker zugeführt werden, dessen Ausgangssignale über eine Steuereinrichtung zur Zündwinkelverstellung verwendet werden. Da eine Regelung der Verstärkung des Ausgangssignals des Klopfsensors nicht vorgesehen ist, schwankt dieses in weiten Bereichen, eine sichere Klopferkennung ist daher nicht gewährleistet.

### Vorteile der Erfindung

Das erfindungsgemäße Verfahren zur Klopfregelung von Brennkraftmaschinen mit den kennzeichnenden Merkmalen des Hauptanspruches hat demgegenüber den Vorteil, daß keine Korelation zwischen Klopferkennung und automatischer Verstärkungsregelung mehr vorliegt, da daß während des Hilfsmeßfensters gebildete zweite Integral vom ersten Integral unabhängig ist. Das zweite Integral kann direkt den Verstärkungsfaktor des Regelverstärkers einstellen, es ist aber auch möglich, auf die Entscheidungsschwelle zur Klopferkennung durch das zweite Integral Einfluß zu nehmen. Da das zweite Integral im wesentlichen das Hintergrundgeräusch der Brennkraftmaschine repräsentiert, kann damit auf unterschiedliche Signal-Zu-Rausch-Verhältnisse der Signale Rücksicht genommen werden. In besonders einfacher Ausgestaltung wird das Hilfsmeßfenster nicht durch Geber von der Kurbelwelle abgenommen, sondern im Mikrorechner in einem festen Verhältnis zum Meßfenster gebildet. Dabei ist es besonders vorteilhaft, die zeitliche Lage bzw. die Dauer des Hilfsmeßfensters in Abhangigkeit von wenigstens einem Betriebsparameter der Brennkraftmaschine zu setzen. So ist es etwa möglich, die Dauer des Hilfsmeßfensters in Abhängigkeit der Last der Brennkraftmaschine zu verringern.

### Zeichnung

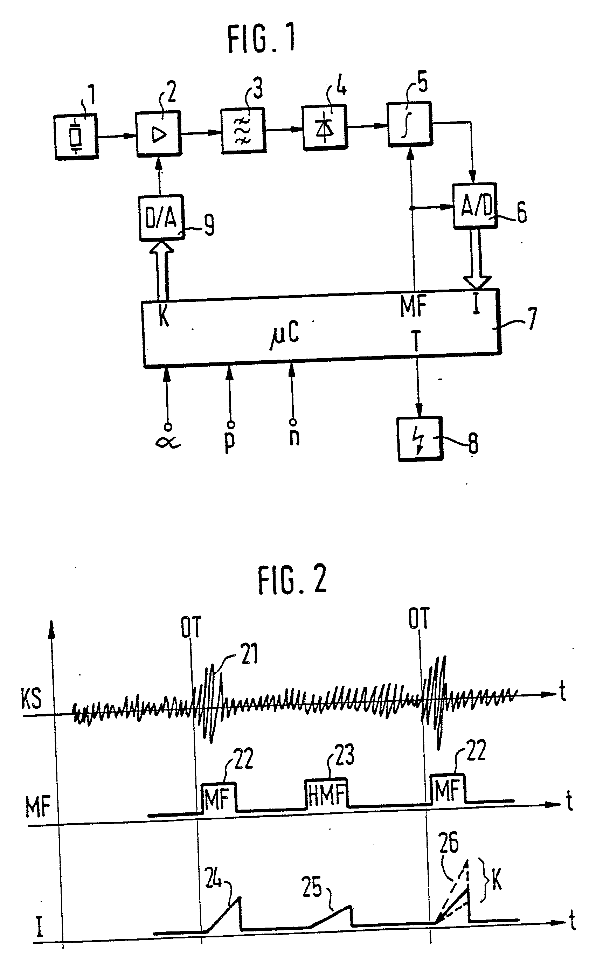

Ein Ausführungsbeispiel der Erfindung ist in der Zeichnung dargestellt und in der nachfolgenden Beschreibung naher erläutert. Figur 1 zeigt hierfür das Schaltbild einer Vorrichtung zur Durchführung des Verfahrens, Figur 2 zeigt die Ausgangssignale des Regelverstärkers, die Lage des Meßfensters und der Integrationswerte, die jeweils über der Zeit aufgetragen sind.

### Beschreibung des Ausführungsbeispiels

In Figur 1 ist ein Klopfsensor 1 an einen Regelverstärker 2 angeschlossen, der auf ein als Bandpaß ausgebildetes Klopffilter 3 führt. Ihm folgt ein Gleichrichter 4 und ein Integrierer 5. Das Ausgangssignal des Integrierers 5 wird von einem Analog-Digital-Wandler 6 gewandelt und als Integrationsergebnis I auf einen Mikrorechner 7 gegeben. Der Mikrorechner 7 berechnet daraus einen Zündzeitpunkt T für eine Zündungsendstufe 8. Zur Regelung des Verstärkungsfaktors k des Regelverstärkers 2 ist an den Mikrorechner 7 ein Digital-Analog-Wandler 9 angeschlossen, der auf den Regeleingang des Regelverstärkers 2 führt. Zur Ablaufsteuerung der Integration im Integrierer 5 und der Wandlung im Analog-Digital-Wandler 6 gibt der Mikrorechner 7 ein Meßfenstersignal MF an diese ab. Weiterhin erhält der Mikrorechner 7 Informationen über den aktuellen Kurbelwellenwinkel, den Druck p im Ansaugrohr und die Drehzahl n einer zur Vereinfachung der Darstellung nicht näher gezeigten Brennkraftmaschine.

Der Klopfsensor 1 erfaßt die Schwingungen der Brennkraftmaschine und gibt ein entsprechendes elektrisches Signal auf den Regelverstärker 2. Am Ausgang des Regelverstärkers 2 stehen dann Signale an, wie sie in Figur 2 in der ersten Zeile dargestellt sind. Deutlich erkennbar ist das Auftreten von Schwingungen erhöhter Amplitude im Moment höchsten Brennraumdruckes nach dem oberen Totpunkt OT. Dieses Signal wird über das Klopffilter 3 bandpaßgefiltert und durch den Gleichrichter 4 gleichgerichtet. Im Integrator 5 wird während eines Meßfensters MF das gleichgerichtete Ausgangssignal des Gleichrichters 4 integriert. In der Figur 2 ist in Zeile 2 ein Meßfensterimpuls 22 gezeigt, und in Zeile 3 der Figur 2 ein sich darauf einstellendes Ausgangssignal 24 des Integrierers 5. Am Ende des Meßfensters 22 wird der erreichte Integrationswert vom Analog-Digital-Wandler 6 gewandelt und das Integrationsergebnis als Zahlenwert I in den Mikrorechner 7 eingelesen.

Zur Berechnung des notwendigen Verstärkungsfaktors k für den Regelverstärker 2 bildet der Mikrorechner 7 außerhalb des Meßfensters 22 ein Hilfsmeßfenster 23, wie in Figur 2, Zeile 2, gezeigt ist. Wie beim Meßfenster 22 wird auch hier das Ausgangssignal des Gleichrichters 4 integriert, so daß sich ein Signal 25 gemäß der Figur 2, Zeile 3, am Ausgang des Integrierers 5 ergibt. Dieser Wert wird ebenfalls nach dem Ende des Hilfsmeßfensters gewandelt und als Zahlenwert I in dem Mikrorechner 7 eingelesen. Der Wert I, der während des Hilfsmeßfensters gebildet wurde, bestimmt nun den Verstärkungsfaktor k des Regelverstärkers 2. Hierfür werden verschiedene, während des Hilfsmeßfensters vorangegangener Verbrennungszyklen gebildete Werte I gespeichert und aus ihnen ein Mittelwert gebildet. Dieser Mittelwert ist umgekehrt proportional zum Verstärkungsfaktor k, den der Mikrorechner 7 dem Digital-Analog-Wandler 9 und damit dem Regelverstärker 2 zuführt.

In anderer Ausgestaltung der Erfindung wird der Verstärkungsfaktor k nicht durch Mittelwertbildung vom vergangenen Werten I gebildet, sondern ist in einem Speicherbereich als Kennfeld abgespeichert. Der aktuelle Verstärkungsfaktor k wird dann durch den aktuellen Wert I und durch die Betriebsparameter Druck p und Drehzahl n ausgelesen und dem Digital-Analog-Wandler 9 zugeführt.

Selbstverständlich ist die Erfindung nicht auf das hier gewählte Ausführungsbeispiel beschränkt. So ist es durchaus möglich, das Ausgangssignal des Regelverstärkers 2 direkt abzutasten und die so erhaltenen Abtastwerte über einen Analog-Digital-Wandler dem Mikrocomputer 7 als Zahlenfolge zuzuführen. Die Funktion von Klopffeld 3, Gleichrichter 4 und Integrierer 5 des hier beschriebenen Ausführungsbeispieles werden dann durch digitale Filteralgorithmen in der Software des Mikrorechners 7 gebildet.

## Patentansprüche

1. Verfahren zur Klopfregelung von Brennkraftmaschinen, bei dem während eines ersten Kurbelwellenwinkelsynchronen Meßfensters ein von Klopfvorgängen abhängiges Signal zur Bildung einer ersten Größe verwendet wird und während eines ebenfalls Kurbelwellenwinkelsynchronen Hilfsmeßfensters ein vom Hintergrund geräusch abhängiger Teil des Signals zur Bildung einer zweiten Größe verwendet wird und die erste und zweite Größe einer Entscheidung zugeführt werden, ob klopfverhindernde Maßnahmen zu ergreifen sind, wobei eine Signalverstärkung vorgesehen ist, dadurch gekennzeichnet, daß die erste Größe durch Integration des Signals während des ersten Meßfensters gebildet wird und daß die zweite Größe durch Integration während des Hilfsmeßfensters gebildet und zur Regelung des Verstärkungsfaktors für die Signalverstärkung herangezogen wird.

2. Verfahren nach Anspruch 1, dadurch gekennzeichnet, daß der Verstärkungsfaktor durch einen Mittelwert von zweiten Integralen vorangegangener Verbrennungszyklen bestimmt wird.

3. Verfahren nach Anspruch 1, dadurch gekennzeichnet, daß der Verstärkungsfaktor durch ein Kennfeld bestimmt wird, das wenigstens durch den Werte des zweiten Integrals adressiert wird.

4. Verfahren nach einem der vorhergehenden Ansprüche, dadurch gekennzeichnet, daß der Kurbelwellenwinkelbereich des ersten Meßfensters in einem festen Verhältnis zum Kurbelwellenwinkelbereich des Hilfs-Meßfensters steht.

5. Verfahren nach einem der vorhergehenden Ansprüche, dadurch gekennzeichnet, daß die Lage des Hilfsmeßfensters in Abhängigkeit von wenigstens einem Betriebsparameter der Brennkraftmaschine steht.

## Claims

1. Method of controlling knock in an internal-combustion engine, in which a signal dependent on knock processes is used during a first measuring window, which is synchronous with the crankshaft angle, to form a first quantity and a part of the signal which is dependent on the background noise is used during an auxiliary measuring window, which is likewise synchronous with the crankshaft angle, to form a second quantity and the first and second quantity are fed to a decision stage for a decision as to whether knock-preventing measures are to be taken, a signal amplification being provided, characterized in that the first quantity is formed by integration of the signal during the first measuring window and in that the second quantity is formed by integration during the auxiliary measuring window and used for controlling the gain factor for the signal amplification.

2. Method according to Claim 1, characterized in that the gain factor is determined by a mean value of second integrals of preceding combustion cycles.

3. Method according to Claim 1, characterized in that the gain factor is determined by a characteristic diagram which is addressed at least by the value of the second integral.

4. Method according to one of the preceding claims, characterized in that the crankshaft angular range of the first measuring window is in a fixed relationship with the crankshaft angular range of the auxiliary measuring window.

5. Method according to one of the preceding claims, characterized in that the position of the auxiliary measuring window is a function of at least one operating parameter of the internal-combustion engine.

**Revendications**

1. Procédé de régulation du cliquetis pour un moteur à combustion interne, dans lequel, pendant une première fenêtre de mesure synchrone par rapport à l'angle du vilebrequin, on utilise un signal dépendant des processus de cliquetis dans le but de former une première grandeur et, pendant une fenêtre de mesure auxiliaire, également synchrone par rapport à l'angle du vilebrequin, on utilise une partie du signal dépendant du bruit de fond, dans le but de former une deuxième grandeur, et la première et la deuxième grandeur étant soumises à une décision concernant l'application de mesures destinées à empêcher le cliquetis, une amplification de signal étant prévue, caractérisée par le fait que la première grandeur est formée par intégration du signal pendant la première fenêtre de mesure et en ce que la deuxième grandeur est formée par intégration pendant la fenêtre de mesure auxiliaire et qu'il lui est fait appel dans le but de réguler le facteur d'amplification de l'amplification du signal.

2. Procédé selon la revendication 1, caractérisé en ce que le facteur d'amplification est déterminé par une valeur moyenne des deuxièmes intégrales de cycles de combustion précédents.

3. Procédé selon la revendication 1, caractérisé en ce que le facteur d'amplification est déterminé par un réseau de caractéristiques qui est au moins adressé à l'aide des valeurs de la deuxième intégrale.

4. Procédé selon l'une des revendications précédentes, caractérisé en ce que la plage angulaire du vilebrequin de la première fenêtre de mesure est située dans un rapport fixe par rapport à la plaque angulaire du vilebrequin de la fenêtre de mesure auxiliaire.

5. Procédé selon l'une des revendications précédentes, caractérisé en ce que la position de la fenêtre de mesure auxiliaire est située en fonction d'au moins un paramètre de fonctionnement du moteur à combustion interne.

FIG.1

FIG.2